# EUROPÄISCHE PATENTSCHRIFT

(11) **EP 1 034 382 B1**
(45) Veröffentlichungstag und Bekanntmachung des Hinweises auf die Patenterteilung: **08.05.2002**
(21) Anmeldenummer: 98946232.0
(22) Anmeldetag: 11.07.1998
(51) Int. Cl.: F16D 9/08, B60N 2/02

(54) **SICHERHEITSEINRICHTUNG FÜR EIN GETRIEBE**
SAFETY DEVICE FOR A GEAR
DISPOSITIF DE SECURITE POUR UN ENGRENAGE

(30) Priorität: 06.12.1997 DE 19754260
(43) Veröffentlichungstag der Anmeldung: 13.09.2000
(73) Patentinhaber: ROBERT BOSCH GMBH, 70442 Stuttgart (DE)
(72) Erfinder: OBERLE, Hans-Jürgen, D-76437 Rastatt (DE)
(86) Internationale Anmeldenummer: DE9801934
(87) Internationale Veröffentlichungsnummer: WO9930056

(56) Entgegenhaltungen:
- WO-A-97/43557
- DE-A- 19 502 523
- US-A- 4 195 881
- US-A- 5 681 086

## Beschreibung

### Stand der Technik

Die Erfindung geht aus von einer Sicherheitseinrichtung nach der Gattung des Patentanspruchs 1.

Es ist schon eine derartige Sicherheitseinrichtung für ein Getriebe zur Verstellung von Klappen an Flugzeugtragflächen bekannt (WO 97/43557). Dort ist die Sollbruchstelle als Querschnittsschwächung an einer Welle ausgebildet. Die Welle verbindet eine Radscheibe eines ersten Zahnrads mit einer Nabe eines zweiten Zahnrads. Die beiden Zahnräder und die Welle mit Sollbruchstelle bilden ein drehmomentubertragendes Getriebeglied, welches zwischen einem Antriebselement und einem Abtriebselement des Getriebes angeordnet ist. Die Sollbruchstelle der bekannten Sicherheitseinrichtung soll die Antriebsseite und die Abtriebsseite des Getriebes trennen, wenn abtriebsseitig eine Überlastung des Getriebes auftritt. Ein dann wirksam werdendes Klemmgesperre in Form einer Lamellenbremse verhindert das selbsttatige Verstellen des abtriebsseitigen Getriebeteils. Antriebsseitig bleibt das Getriebe jedoch funktionsfähig wegen der im genannten Anwendungsfall zwingenden Notwendigkeit, weitere Getriebe zur Klappenverstellung durch eine samtliche Getriebe verbindende Welle antreiben zu konnen.

Außerdem ist eine Sicherheitseinrichtung bei Nebenabtrieben von Fahrzeuggetrieben bekannt (DE 296 12 824 U1), bei dem ein drehmomentubertragendes Bauteil mit einer Sollbruchstelle ausgestattet ist. Das Bauteil ist hulsenformig gestaltet, wobei eine als Kerbnut ausgebildete Querschnittsschwachung zwischen einem Bauteilabschnitt, der mit einer antreibbaren Zwischenwelle in Eingriff steht, und einem Abtriebsflansch liegt, von dem ein Drehmoment (Betriebsmoment) an angeschraubte, anzutreibende Einrichtungen abgegeben werden kann.

Im Uberlastfall, zum Beispiel bei blockierter anzutreibender Einrichtung, wird der Flansch durch ein Überlastmoment unter Lösen des Drehmomentschlusses vom angetriebenen Bauteilabschnitt abgetrennt. Die Sicherheitseinrichtung ist auch wirksam, wenn bei abgeschaltetem Antrieb die Überlastung von der abtriebsseitigen Einrichtung ausgeht. Ein in den Flansch eingreifender Deckel verhindert, daß der Flansch nach dem Durchtrennen der Sollbruchstelle verloren geht oder unkontrolliert herumschleudert. Diese bekannte Sicherheitseinrichtung mag zwar vielfach die Anforderungen erfüllen, jedoch kann in manchen Anwendungsfällen von der nicht angetriebenen, angeflanschten Einrichtung eine Gefahr ausgehen.

### Vorteile der Erfindung

Die erfindungsgemäße Sicherheitseinrichtung mit den Merkmalen des Patentanspruchs 1 hat demgegenüber den Vorteil, daß zur Schadensbegrenzung bei einer abtriebsseitigen Überlastung des Getriebes sowohl antriebsseitig als auch abtriebsseitig der Sollbruchstelle angeordnete Teile des Getriebes festgehalten werden. Dies erfolgt dadurch, daß bei einem abtriebsseitig ausgehenden Überlastmoment nach dem aufgrund der Selbsthemmung des Getriebes erfolgenden Durchtrennen der Sollbruchstelle das an der Nabe angeformte Kurvenglied nach einem Bruchteil einer Nabenumdrehung an dem Steg angreift und diesen gegen die Wandung der Gehäuseausnehmung preßt. Hierdurch kommt es zumindest durch Reibschluß zu einer Blockierung der weiteren Drehung von Nabe und Radscheibe mit der Folge, daß das Getriebe nicht mehr bewegt werden kann (Blockiermoment). Das abtriebsseitig ausgehende Drehmoment wird vom Klemmgesperre auf das Gehäuse abgeleitet. Die Blockade der Radscheibe wiederum schützt den antriebsseitigen Teil des Getriebes vor dem genannten Drehmoment, so daß dieser Teil des Getriebes und sein Antriebsmotor nicht beschädigt und nach dem Austausch des zerstörten Getriebeglieds gegen ein neues wieder in den betriebsfähigen Zustand versetzt werden kann.

Durch die in den Unteransprüchen aufgeführten Maßnahmen sind vorteilhafte Weiterbildungen und Verbesserungen der im Patentanspruch 1 angegebenen Sicherheitseinrichtung möglich.

Mit den im Anspruch 2 gekennzeichneten Formgebungen des Getriebeglieds ist die Bemessung der Sollbruchstelle auf einfache Weise möglich.

Die Maßnahme nach Anspruch 3 ermöglicht die Einstellung eines relativ hohen, vom Klemmgesperre aufgenommenen Blockiermoments, da zusätzlich zum Reibschluß ein Formschluß erzeugt wird, der ein "Verkrallen" des Stegs an der Gehäusewandung bewirkt.

Die Hohe des Blockiermoments ist auch durch die Weiterbildungen der Sicherheitseinrichtung nach den Ansprüchen 4 und 5 einstellbar.

Die im Anspruch 6 offenbarte Verwendung der erfindungsgemäßen Sicherheitseinrichtung ist von wesentlichem Vorteil, weil im Falle eines Unfalls die wirksam werdende Blockade des Getriebeglieds ein Verschieben des Sitzes relativ zum Fahrzeug verhindert. Vorteilhaft ist auch die Anordnung der erfindungsgemäßen Sicherheitseinrichtung in einer Rückenlehnen-Verstelleinrichtung des Fahrzeugsitzes. Dort verhindert sie das Umklappen der Rückenlehne. Damit wird die Verletzungsgefahr der auf dem Sitz befindlichen Person im Falle eines Unfalls erheblich gemindert. Wahrend bisher die auf den Sitz wirkende Belastung mehr oder weniger von einem entsprechend aufwendig dimensionierten Getriebe aufgenommen werden mußte (EP 0 359 008 B1, EP 0 367 096 A2), kann bei Anwendung der Sicherheitseinrichtung der antriebsseitige Teil des Getriebes so ausgelegt werden, daß er das zum Ansprechen der Sicherheitseinrichtung erforderliche Überlastmoment unbeschadet aufnimmt, vom sehr viel höheren Blockiermoment dagegen frei bleibt. Antriebsmotor und Getriebe eines sogenannten Sitzverstellers oder eines Lehnenverstellers können daher kostengünstiger hergestellt und nach einem Unfall durch Austausch des Getriebeglieds instandgesetzt werden.

### Zeichnungen

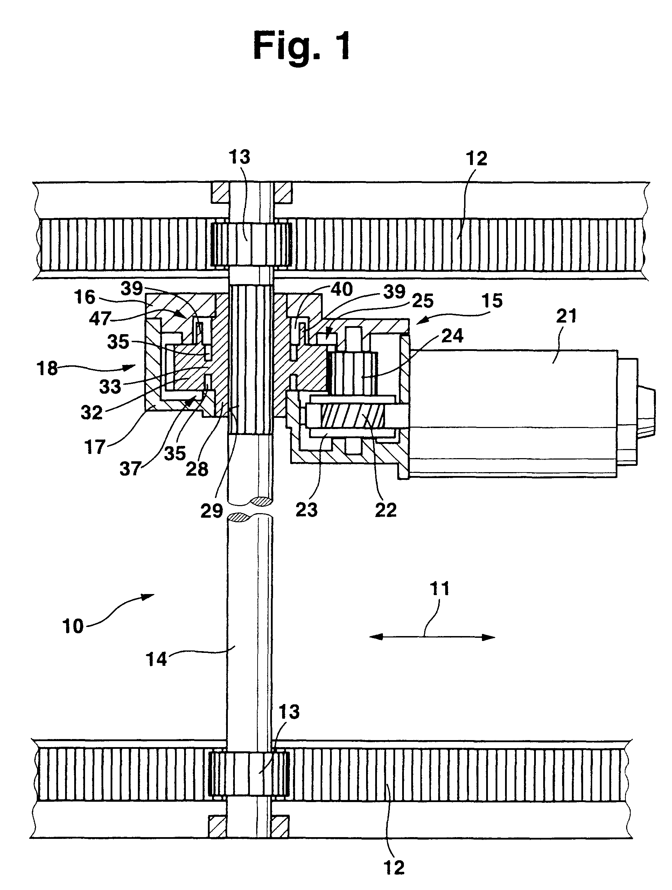

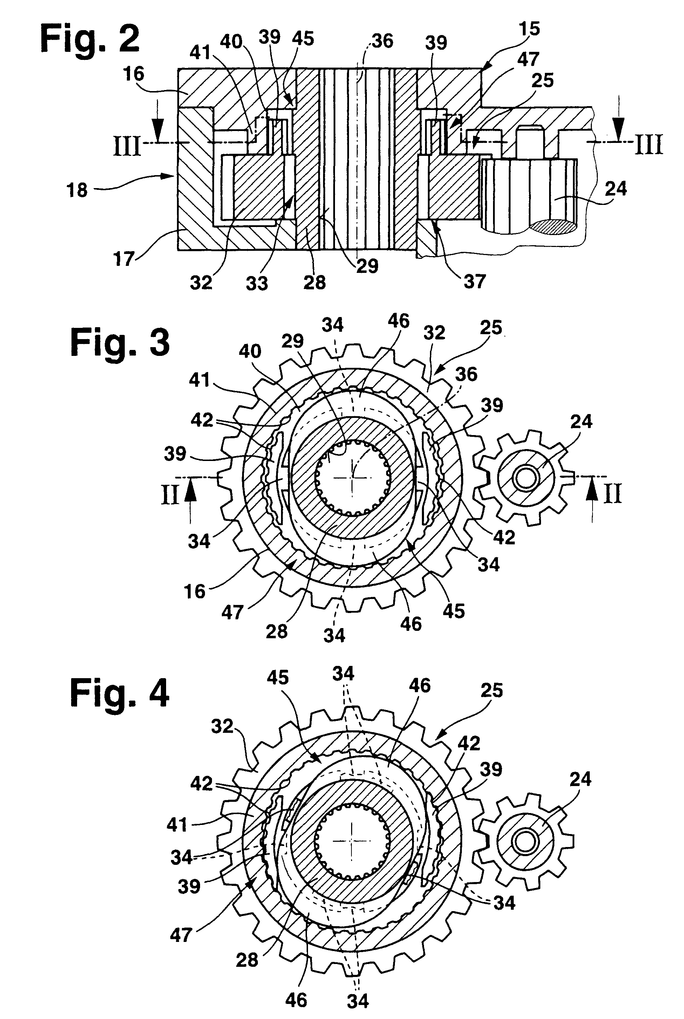

Ein Ausführungsbeispiel der Erfindung ist in der Zeichnung vereinfacht dargestellt und in der nachfolgenden Beschreibung näher erläutert. Es zeigen Figur 1 eine Draufsicht auf ein geschnitten gezeichnetes Getriebe mit Sicherheitseinrichtung für die Sitzverstellung in einem Kraftfahrzeug, Figur 2 einen Abschnitt des Getriebes nach Figur 1 gemäß Schnittverlauf II-II in Figur 3, mit einem ein Klemmgesperre aufweisenden Getriebeglied, Figur 3 einen Schnitt gemäß Linienzug III-III in Figur 2 durch das Getriebe und Figur 4 einen Schnitt gemäß Figur 3 mit am Getriebeglied wirksamen Klemmgesperre.

### Beschreibung des Ausführungsbeispiels

Eine in Figur 1 nur zum Teil wiedergegebene Einrichtung 10 zum Verstellen eines Fahrzeugsitzes in Richtung der Fahrzeuglängsachse (Pfeil 11) hat beiderseits eines im übrigen nicht dargestellten Sitzgestells angeordnete Zahnstangen 12, mit denen jeweils ein Ritzel 13 auf einer Sitzverstellwelle 14 kämmt. Mit der Sitzverstellwelle 14 ist ein Getriebe 15 verbunden, dessen aus den beiden Gehäuseteilen 16 und 17 bestehende Getriebegehäuse 18 fest mit der Fahrzeugkarosserie (nicht dargestellt) verbunden ist.

An das Getriebegehäuse 18 ist ein elektrischer Antriebsmotor 21 angeflanscht. Der Motor 21 hat eine Schnecke 22, welche mit einem im Getriebegehäuse 18 gelagerten Schneckenrad 23 in Eingriff steht. Schnecke 22 und Schneckenrad 23 bilden eine erste, selbsthemmende Getriebestufe des Getriebes 15. Mit dem Schneckenrad 23 ist drehfest ein Ritzel 24 verbunden. Dieses kämmt mit einem im Getriebegehäuse 18 geführten Stirnzahnrad 25. Das Ritzel 24 und das Stirnzahnrad 25 bilden eine zweite Getriebestufe des Getriebes 15. Die beiden aufeinanderfolgenden, untersetzenden Getriebestufen heben das Drehmoment des Antriebsmotors 21 auf das am Stirnzahnrad 25 wirkende, zur Sitzverstellung erforderliche Betriebsmoment an.

Das Stirnzahnrad 25 hat eine das Getriebegehäuse 18 durchdringende Nabe 28 mit innenseitiger Kerbverzahnung 29 (Figur 2). Das Stirnzahnrad 25 ist mit seiner Nabe 28 drehfest von der gleichfalls mit Kerbverzahnung 29 ausgerüsteten Sitzverstellwelle 14 durchgriffen. Das Stirnzahnrad 25 bildet somit ein drehmomentübertragendes Getriebeglied zwischen einem vom Ritzel 24 gebildeten Antriebselement und einem von der Sitzverstellwelle 14 dargestellten Abtriebselement des Getriebes 15.

Das Stirnzahnrad 25 hat eine Radscheibe 32, welche mit der Nabe 28 durch eine Sollbruchstelle 33 in Form von zwischen der Radscheibe und der Nabe verlaufenden Stegen 34 oder Speichen gebildet ist (Figur 3). Die hierdurch erzeugte Querschnittsschwächung des Stirnzahnrads 25 kann auch durch Umlaufnuten 35 erzeugt werden (Figur 1). Die Sollbruchstelle 33 kann, abweichend vom dargestellten Ausführungsbeispiel, mehr oder weniger als die vier, in gleichmäßiger Teilung zwischen der Nabe 28 und der Radscheibe 32 angeordneten Stege 34 aufweisen. Die Sollbruchstelle 33 kann auch auf einem größeren Radius bezüglich der Drehachse 36 des Stirnzahnrads 25 in der Radscheibe 32 liegen. Die Sollbruchstelle 33 mit der abtriebsseitigen Nabe 28 sowie der abtriebsseitigen Radscheibe 32 des Stirnzahnrads 25 ist Bestandteil einer Überlasttrennkupplung 37, mit welcher der Drehmomentschluß im Getriebe 15 im Überlastfall lösbar ist. Dabei liegt das die Trennung auslösende Überlastmoment ausreichend oberhalb des Betriebsmoments.

Antriebsseitig der Sollbruchstelle 33 sind an der Radscheibe 32 des Stirnzahnrads 25 zwei diametral gegenüberliegende, sichelförmige Stege 39 angeformt (Figur 3). Die axial von der Radscheibe 32 aufragenden Stege 39 erstrecken sich in eine kreiszylindrische Ausnehmung 40 des Gehäuseteils 16. Innenumfangsseitig ist die Wandung 41 der Ausnehmung 40 mit einer Profilierung 42 in Form von Rillen, Zähnen oder Wellen versehen. Eine gleichartige Profilierung 42 weisen die Stege 39 auf ihrer der Wandung 41 zugekehrten Seitenfläche auf.

Abtriebsseitig der Sollbruchstelle 33 ist an der Nabe 28 ein Kurvenglied 45 angeformt, welches sich auf der gleichen Seite der Radscheibe 32 neben den Stegen 39 erstreckt. Das Kurvenglied 45 weist zwei diametral gegenüberliegende Exzenternocken 46 auf, die in Umfangsrichtung um 90° bezüglich der Stege 39 versetzt sind. Die Exzenternocken 46 des Kurvenglieds 45 haben eine maximale radiale Ausdehnung, welche größer ist als der radiale Abstand der Stege 39 zur Drehachse 36 des Stirnzahnrads 25. Die radiale Ausdehnung der Exzenternocken 46 und die Lage der Stege 39 ist derart auf den Durchmesser der Ausnehmung 40 abgestimmt, daß die Wandung 41 des Gehäuseteils 16 die Exzenternocken und Stege mit geringem radialem Spiel umgreift. Die radial auslenkbar ausgebildeten Stege 39 bilden in Verbindung mit dem Kurvenglied 45 und der Ausnehmung 40 des Gehäuseteils 16 ein Klemmgesperre 47. Das Klemmgesperre 47 stellt in Verbindung mit der Überlasttrennkupplung 37 eine Sicherheitseinrichtung des Getriebes 15 dar, deren Funktion nachstehend beschrieben ist. Abweichend vom Ausführungsbeispiel können am Stirnzahnrad 25 auch lediglich ein Steg 39 und ein Exzenternocken 46 angeformt sein. Desweiteren kann das Stirnzahnrad 25 auch mehr als zwei Stege 39 und Exzenternocken 46 aufweisen, beispielsweise jeweils drei in gleichmäßiger Teilung angeordnete und um 60° gegeneinander versetzte Stege 39 und Exzenternocken 46.

Durch Bestromen des elektrischen Antriebsmotors 21 ist der Kraftfahrzeugsitz in Abhängigkeit von der Drehrichtung des Motors vor- oder zurückstellbar. Da das Getriebe 15 selbsthemmend ist, bleibt die Stellung des Sitzes bei abgeschaltetem Antriebsmotor 21 erhalten.

Bei besetztem Sitz werden bei einem Unfall an den Ritzeln 13 der Sitzverstellwelle 14 sehr hohe Drehmomente, nachfolgend als Unfallmoment bezeichnet, wirksam. Da das Unfallmoment das Überlastmoment der Überlasttrennkupplung 37 überschreitet und die selbsthemmende Getriebestufe 22, 23 die Radscheibe 32 des Stirnzahnrades 25 am Drehen hindert, kommt es zum Bruch der Sollbruchstelle 33, das heißt die Stege 34 zwischen der Nabe 28 und der Radscheibe 32 scheren unter Drehen der Nabe ab. Die weitere Drehung der Nabe 28 aufgrund des Unfallmoments hat zur Folge, daß die Exzenternocken 46 an den Stegen 39 angreifen und diese radial nach außen gegen die Wandung 41 des Gehäuseteils 16 pressen (Figur 4). Aufgrund der Profilierung 42 an Wandung 41 und Stegen 39 tritt zusätzlich zum Reibschluß ein "Verkrallen", also ein Formschluß zwischen den genannten Teilen ein mit der Folge, daß die Nabe 28 an einer weiteren Drehung gehindert wird. Diese Funktion des Klemmgesperres 47 wird bei der dargestellten Ausführungsform mit zwei Exzenternocken 46 bereits nach weniger als 1/8 einer Sitzverstellwellenumdrehung wirksam. Der Kraftfahrzeugsitz verlagert sich daher nur um ein geringes Maß gegenüber der Karosserie des Fahrzeugs. Diese Wirksamkeit des Klemmgesperres ist in beiden Bewegungsrichtungen 11 des Kraftfahrzeugsitzes gegeben. Das Klemmgesperre vermag ein Blockiermoment aufzubringen, welches sich mit mehr oder weniger starker Anpressung der Stege 39 an die Wandung 41 der Größe des Unfallmoments anpaßt.

Das Unfallmoment wird auf das feststehende Getriebegehäuse 18 abgeleitet. Dabei unterliegt die von der Nabe 28 abgetrennte Radscheibe 32 im wesentlichen keiner Belastung durch das Unfallmoment, so daß antriebsseitig lediglich das zum Durchtrennen der Sollbruchstelle 33 erforderliche Überlastmoment auf das Schneckenrad 23 einwirkt. Demzufolge unterliegen die Schnecke 22 und der elektrische Antriebsmotor 21 einer nur geringen Axialkraft. Der antriebsseitige Teil des Getriebes 15 und der Antriebsmotor 21 sind daher vor einer Überlastung und Zerstörung durch das Unfallmoment geschützt.

## Patentansprüche

1. Sicherheitseinrichtung für ein von einem Antrieb (21) angetriebenes Getriebe (15) mit
- einem Antriebselement (24) und einem Abtriebselement (14),
- einem drehmomentübertragenden Getriebeglied (25) zwischen dem Antriebselement (24) und dem Abtriebselement (14),
- einer antriebsseitigen Radscheibe (32) und einer Nabe (28) als abtriebsseitiger Getriebeteil des Getriebeglieds (25),
- einer als Querschnittsschwächung ausgebildeten Sollbruchstelle (33) zwischen der Nabe (28) und dem Umfang der Radscheibe (32) des Getriebeglieds (25) sowie
- einem Klemmgesperre (47), mit dem bei einer Trennung der Sollbruchstelle (33) der abgetrennte, abtriebsseitige Getriebeteil (28) mittelbar an einem Gehäuse (18) des Getriebes (15) festklemmbar ist,
**gekennzeichnet durch** die folgenden Merkmale:
- an der Radscheibe (32) ist antriebsseitig der Sollbruchstelle (33) wenigstens ein axial aufragender, radial auslenkbarer Steg (39) angeformt,
- an der Radscheibe (32) oder an der Nabe (28) ist abtriebsseitig der Sollbruchstelle (33) wenigstens ein exzenterformiges Kurvenglied (45) angeformt,
- das auf der gleichen Seite der Radscheibe (32) neben dem Steg (39) befindliche Kurvenglied (45) ist in Umfangsrichtung gegenüber dem Steg (39) versetzt und hat eine maximale radiale Ausdehnung, welche größer ist als der radiale Abstand des Stegs (39) zur Achse (36) des Getriebeglieds (25),
- der Steg (39) und das Kurvenglied (45) sind von der Wandung (41) einer kreiszylindrischen Ausnehmung (40) des bezuglich des Getriebeglieds (25) unverdrehbaren Gehäuses (18) mit geringem radialen Spiel umgriffen,
- das Getriebe (15) ist antriebsseitig selbsthemmend ausgebildet.

2. Sicherheitseinrichtung nach Anspruch 1, **dadurch gekennzeichnet, daß** die Sollbruchstelle (33) als Speichen oder Stege (34) oder als Umlaufnut (35) des Getriebeglieds (25) ausgebildet ist.

3. Sicherheitseinrichtung nach Anspruch 1, **dadurch gekennzeichnet, daß** der Steg (39) und die Ausnehmung (40) des Gehäuses (18) an ihren einander zugewandten Umfangsflächen mit einer Profilierung (42) versehen sind.

4. Sicherheitseinrichtung nach Anspruch 1, **dadurch gekennzeichnet, daß** am Getriebeglied (25) jeweils zwei diametral gegenüberliegende und um 90° gegeneinander versetzte Stege (39) und Kurvenglied-Exzenter (46) angeformt sind.

5. Sicherheitseinrichtung nach Anspruch 1, **dadurch gekennzeichnet, daß** am Getriebeglied (25) jeweils drei in gleichmäßiger Teilung angeordnete und um 60° gegeneinander versetzte Stege (39) und Kurvenglied-Exzenter (46) angeformt sind.

6. Verfahren zur Verwendung einer Sicherheitseinrichtung nach Anspruch 1, **dadurch gekennzeichnet, daß** das Getriebe (15) von einem Elektromotor (21) antreibbar ist und die Nabe (28) des Getriebeglieds (25) mit einer Verstelleinrichtung (10) eines Kraftfahrzeugsitzes in Verbindung steht.

## Claims

1. Safety device for a mechanism (15) driven by a drive (21), with
- an input element (24) and an output element (14),
- a torque-transmitting mechanism member (25) between the input element (24) and the output element (14),
- an input-side wheel disc (32) and a hub (28) as an output-side mechanism component of the mechanism member (25),
- a predetermined breaking point (33), designed as a weakening of the cross section, between the hub (28) and the circumference of the wheel disc (32) of the mechanism member (25), and
- a clamping-type locking device (47), by means of which the separated output-side mechanism component (28) can be firmly clamped indirectly to a housing (18) of the mechanism (15) if the predetermined breaking point (33) is broken off,
**characterized by** the following features:
- at least one radially deflectable web (39) that projects axially upwards is formed integrally on the wheel disc (32) on the input side of the predetermined breaking point (33),
- at least one eccentric cam member (45) is formed integrally on the wheel disc (32) or on the hub (28), on the output side of the predetermined breaking point (33),
- the cam member (45), which is situated next to the web (39), on the same side of the wheel disc (32), is offset in the circumferential direction relative to the web (39) and has a maximum radial extent that is greater than the radial distance between the web (39) and the axis (36) of the mechanism member (25),
- the web (39) and the cam member (45) are surrounded with a small radial clearance by the wall (41) of a circular-cylindrical recess (40) of the housing (18), which is nonrotatable relative to the mechanism member (25),
- the mechanism (15) is of self-locking design on the input side.

2. Safety device according to Claim 1, **characterized in that** the predetermined breaking point (33) is designed as spokes or webs (34) or as a peripheral groove (35) on the mechanism member (25).

3. Safety device according to Claim 1, **characterized in that** the web (39) and the recess (40) of the housing (18) are provided with profiling (42) on their mutually facing circumferential surfaces.

4. Safety device according to Claim 1, **characterized in that** two diametrically opposite webs (39) and cam-member eccentrics (46) offset by 90° relative to one another are formed integrally on the mechanism member (25).

5. Safety device according to Claim 1, **characterized in that** three webs (39) and three cam-member eccentrics (46) arranged at a uniform pitch and offset by 60° relative to one another are formed integrally on the mechanism member (25).

6. Method for using a safety device according to Claim 1, **characterized in that** the mechanism (15) can be driven by an electric motor (21) and the hub (28) of the mechanism member (25) is connected to an adjusting device (10) of a motor-vehicle seat.

## Revendications

1. Dispositif de sécurité pour un engrenage (15) mu par un entraînement (21) comprenant :
- un élément d'entrée (24) et un élément de sortie (14),
- un organe d'engrenage (25) faisant passer le couple de l'élément d'entrée (24) à l'élément de sortie (14),
- un disque de roue (32) du côté entrée et un moyeu (28) constituant la partie de sortie de l'organe d'engrenage (25),
- une zone de rupture imposée (33) constituée par un affaiblissement de la section entre le moyeu (28) et la périphérie du disque de roue (32) de l'organe d'engrenage (25), et
- un blocage par coincement (47) par lequel, lorsque la zone de rupture imposée (33) se sépare, la partie d'engrenage (28) séparée, située du côté sortie, est coincée directement sur le boîtier (18) de l'engrenage (15),
**caractérisé en ce que**
- sur le disque de roue (32), du côté entrée de la zone de rupture imposée (33) se trouve au moins une barrette (39) dirigée axialement et pouvant être déviée radialement,
- sur le disque de roue (32) ou sur le moyeu (28) se trouve du côté sortie de la zone de rupture imposée (33) au moins un organe de came (45) en forme d'excentrique,
- l'organe de came (45) situé à côté de la barrette (39) sur le même côté du disque de roue (32) est décalé en direction périphérique par rapport à la barrette (39) et présente une étendue radiale maximale supérieure à la distance radiale entre la barrette (39) et l'axe (36) de l'organe d'engrenage (25),
- la barrette (39) et l'organe de came (45) sont entourés avec un faible jeu par la paroi (41) d'un évidement (40) cylindrique circulaire du boîtier (18) qui ne peut tourner par rapport à l'organe d'engrenage (25),
- l'engrenage (15), du côté entrée, est irréversible.

2. Dispositif de sécurité selon la revendication 1,
**caractérisé en ce que**
la zone de rupture imposée (33) est constituée par des barrettes (34) ou par une gorge circulaire (35) sur l'organe d'engrenage (25).

3. Dispositif de sécurité selon la revendication 1,
**caractérisé en ce que**
la barrette (39) et l'évidement (40) du boîtier (18) présentent sur les faces périphériques en regard un profilage (42).

4. Dispositif de sécurité selon la revendication 1,
**caractérisé en ce que**
l'organe d'engrenage (25) porte une paire de barrettes (39) diamétralement opposées et une paire d'excentriques d'organe à came (46) diamétralement opposés, les paires étant décalées entre elles de 90°.

5. Dispositif de sécurité selon la revendication 1,
**caractérisé en ce que**
l'organe d'engrenage porte trois barrettes (39) régulièrement réparties et trois excentriques d'organe à came (46) régulièrement répartis, avec décalage de 60° entre barrettes et excentriques successifs.

6. Procédé d'utilisation d'un dispositif de sécurité selon la revendication 1,
**caractérisé en ce que**
l'engrenage (15) peut être entraîné par un moteur électrique (21), et le moyeu (28) de l'organe d'engrenage (25) est en relation avec un dispositif de réglage (10) d'un siège de véhicule automobile.
